# EUROPEAN PATENT APPLICATION

(11) **EP 1 729 495 A1**
(43) Date of publication of application: **06.12.2006**
(21) Application number: 06114004.2
(22) Date of filing: 16.05.2006
(51) Int. Cl.: H04N 1/028

(54) **Lighting unit and optical reader having the same**

(30) Priority: 30.05.2005 JP 2005157620; 14.11.2005 JP 2005328909
(71) Applicant: KABUSHIKI KAISHA TOYOTA JIDOSHOKKI, Kariya-shi, Aichi 448-8671 (JP)
(72) Inventor: Niida, Eiki, Kariya-shi Aichi 448-8671 (JP); Kawauchi, Hiroyasu, Kariya-shi Aichi 448-8671 (JP); Ishikawa, Haruyuki, Kariya-shi Aichi 448-8671 (JP)
(74) Representative: TBK-Patent

(57) **Abstract**

A lighting unit (4) is installed in an optical reader (1) having a transparent plate (2) and a sensor (5). The transparent plate can mount a document (3) thereon. The lighting unit includes a light source (6) and a reflective member (7) provided on a light exit side of the light source. The reflective member converges light from the light source on the document. The lighting unit is operable to scan along the transparent plate. The sensor is provided for sensing light reflected from the document.

## Description

### BACKGROUND OF THE INVENTION

The present invention relates to a lighting unit and an optical reader having the lighting unit.

An optical reader is generally installed in a facsimile, a copier or a scanner for reading information printed on a document. The optical reader illuminates a document with light from its light source and then receives light reflected from the document with an image sensor, thus reading information printed on the document through the intensity of light received.

In recent years there has been a rising demand for a small-sized facsimile machine, or the like, and, accordingly, causing an increased need for a small-sized optical reader to be installed in the facsimile machine. In the meantime, there has also been a strong demand for a short scanning time with a superior scanned image quality, and, accordingly, causing an increased need for an intense light from the light source of an optical reader.

To fulfill these demands at once, unexamined Japanese patent application publication No. 6-217083 has disclosed such an optical reader in which a long electroluminescent device (EL device) is used as a light source, a prism array is used for guiding the light from the EL device obliquely in the width direction to converge light on a reading portion as a light guide in which a large number of long microscopic prisms are arranged in parallel relation to the EL device to be formed in a plate-like shape, and the lamination of the prism arrays and the EL device is arranged directly below a glass plate in parallel relation to each other. Thus, a small-sized machine and a superior scanned image quality are sought.

Optical elements such as a prism array or the like for converging the light from the EL device help to enhance the brightness in the condensed direction. Nevertheless, illumination on a reading document which is a lighting target possibly can decrease. This is because the light from the EL device is attenuated while transmitting the optical elements.

The present invention is directed to providing a lighting unit having a high illumination on a lighting target using a small-sized light source and also to providing an optical reader including the lighting unit.

### SUMMARY OF THE INVENTION

In accordance with the present invention, a lighting unit has a light source and a reflective member. The reflective member is provided on a light exit side of the light source. The reflective member converges light from the light source.

In accordance with the present invention, an optical reader has a transparent plate, a lighting unit and a sensor. The transparent plate can mount a document thereon. The lighting unit includes a light source and a reflective member provided on a light exit side of the light source. The reflective member converges light from the light source on the document. The lighting unit is operable to scan along the transparent plate. The sensor is provided for receiving light reflected from the document.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
FIG. 1 is a schematic sectional view of a scanner according to a first preferred embodiment of the present invention;
FIG. 2 is a schematic plan view of an image sensor and lighting units of FIG. 1;
FIG. 3 is a schematic sectional view of an organic EL device, taken along the line I-I in FIG. 2;
FIG. 4 is a schematic view showing the simulation condition for examples according to the first preferred embodiment of the present invention;
FIG. 5 is a schematic sectional view of a scanner according to a second preferred embodiment of the present invention;
FIG. 6 is a schematic view showing the simulation condition for examples according to the second preferred embodiment of the present invention;
FIG. 7 is a schematic view showing the simulation condition for a comparative example 4;
FIG. 8 is a schematic view of a lighting unit according to an alternative embodiment of the present invention; and
FIG. 9 is a schematic view of a flat portion of the lighting unit according to an alternative embodiment of the present invention.

### DETAILED DESCRIPTION OF THE PREFERRED EMBODIMENTS

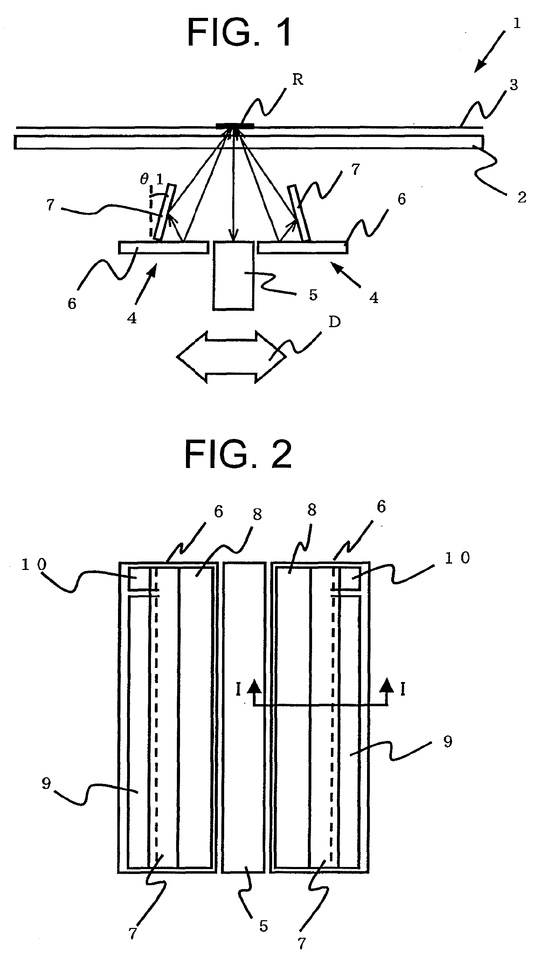

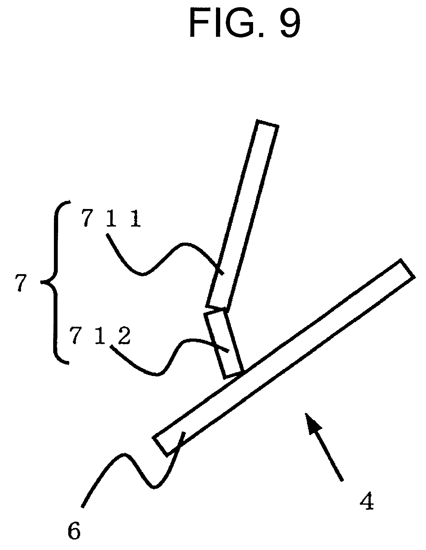

The following will describe a first preferred embodiment of an optical reader and lighting units thereof installed in a scanner according to the present invention with reference to FIGS. 1 through 3. Note that in FIGS. 1 through 9, part of hatching is omitted for the sake of convenience.

As shown in FIG. 1, the scanner 1 includes a transparent glass plate 2, a pair of lighting units 4 arranged below the glass plate 2 for irradiating a document 3 on the glass plate 2 with light, and an image sensor 5 for receiving light reflected from the document 3. Then, light emitted from the lighting units 4 illuminates a portion of the document 3 and the image sensor 5 senses light reflected from the illuminated portion. Information printed on the illuminated portion (the portion illuminated by the lighting units 4) is read depending on the intensity of light reflected. The scanner 1 integrally moves the lighting units 4 and the image sensor 5 along the glass plate 2 (in the direction indicated by the arrow D in FIG. 1) to read the entire document 3.

Each of the lighting units 4 includes an organic electroluminescent device (organic EL device) 6 which serves as a light source and a reflector 7 which serves as a reflective member. In the first preferred embodiment, as shown in FIGS. 1 and 2, the pair of lighting units 4 are provided symmetrically with respect to the image sensor 5 on either side thereof. The surfaces of the lighting units 4 are arranged in parallel relation to the surface of the glass plate 2.

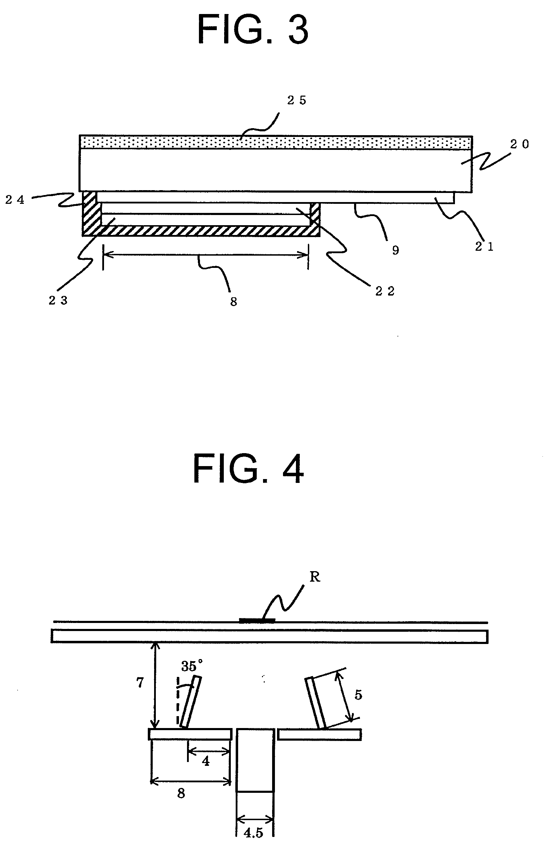

As shown in FIG. 2, each organic EL device 6 is formed in a rectangular shape having long and short sides, the long sides being far longer than the short sides. In other words, each organic EL device 6 is formed in a linear shape. Each of the organic EI devices 6 includes a light emitting portion 8 extending along one of the long sides adjacent to the image sensor 5. Each lighting unit 4 includes a reflector 7 which is mounted on the opposite side of the light emitting portion 8 to the image sensor 5 and oriented from the organic EL device 6 to the glass plate 2, extending along the entire length of the light emitting portion 8 , that is, extending longitudinally of the organic EL device 6. Each organic EL device 6 includes two electrode terminals 9, 10 on the opposite side of the light emitting portion 8 to the image sensor 5 for power supply thereto, having a laminar structure of a first electrode 21, an organic layer 22 including a luminescent layer, a second electrode 23 and a protective film 24 on a substrate 20 in this order, as shown in FIG. 3.

The substrate 20 is a plate-like member supporting the organic EL device 6 and is transparent with a high transmittance to light that goes therethrough. For example, a glass having a high transmittance in the range of visible light, a transparent acrylic resin, or the like, may be used.

The first electrode 21 is made of a known transparent electrode material, such as indium tin oxide (ITO), indium zinc oxide (IZO), zinc oxide (ZnO).

The second electrode 23 is made of an electrode material that reflects light emitted from the organic layer 22. The electrode material may be a known metal electrode or a known alloy electrode, such as Ag and Al.

The organic layer 22 between the first and second electrodes 21, 23 includes a luminescent layer and may be made of an only luminescent layer or a combination of a luminescent layer and one or more layers selected from the group consisting of a hole injection layer, a hole transport layer, an electron injection layer, an electron transport layer, a hole blocking layer and a buffer layer. In this embodiment, the organic layer 22 is designed to emit white light.

A protective film 24 made of a known passivation film is provided for protecting the first electrode 21, the organic layer 22 and the second electrode 23 from ambient moisture and oxygen. The protective film may be an inorganic compound film, such as a silicon oxide film, a silicon nitride film and a silicon oxynitride film, or an organic compound film, such as a resin film.

The transparent electrode 21 extends outside the protective film 24 to form the electrode terminal 9. In the organic EL device 6, the area that the organic layer 22 overlaps with the second electrode 23 forms the light emitting portion 8.

A diffusion film 25, which serves as a light-extracting optical element, is provided on the light exit side of the organic EL device 6. The term "light-extracting optical element" means an optical element to extract light that cannot exit outside the organic EL device because of repeated total reflection within the organic EL device due to a differential in refractive index between the organic EL device and air without the optical element. This diffusion film 25 is so formed that a base material made of a material having approximately the same refractive index as the glass substrate 20 dispersedly contains microscopic beads having a different refractive index from the base material.

Light emitted from the organic layer 22 enters into the glass substrate 20. Without the diffusion film 25, light that reaches the interface between the glass substrate 20 and air with an incidence angle larger than the critical angle determined by the refractive indices of the glass substrate 20 and air is totally reflected and cannot exit into air. Such light cannot be used for illuminating a document and therefore usability of light is low.

When the diffusion film 25 is provided on the light exit side of the glass substrate 20, light advances from the glass substrate 20 to the diffusion film 25 without a remarkable loss because the refractive index of the glass substrate 20 is approximately equal to that of the base material of the diffusion film 25. Then, the beads in the diffusion film 25 change the direction in which light advances. Since light that is totally reflected at the interface between the diffusion film 25 and air also changes its advancing direction due to the beads, the light can exit into air after total reflection at the interface with air once or several times. The diffusion film 25 helps to efficiently extract light emitted from the organic layer 22, thus improving the usability of light.

The light-extracting optical element is not limited to the diffusion film but may be an optical film in which microscopic cones or pyramids are arrayed on the surface in matrix.

The reflectors 7 are to reflect a portion of light emitted from the organic EL devices 6 toward the document 3. The reflective surface of each reflector 7 is preferably a specular reflective surface that specularly reflects incident light. Each reflector 7 is arranged along the light emitting portion 8 of the organic EL device 6 and oriented to make a specified angle θ1 with the normal of the organic EL device 6. This angle θ1 is determined to maximize the illumination at the desired portion of the document 3.

The image sensor 5 is to detect the intensity of light reflected from the document 3 and may be a know image sensor. As may be necessary, a lens for converging reflected light may be provided between the document 3 and the image sensor 5. Note that the term "converging" means that illumination on a lighting target becomes higher in comparison to a structure that no reflective member, such as a reflector, is provided on the light exit side of a light source.

The following will describe the operation of the lighting units 4 and the scanner 1.

As voltage is applied between the electrode terminals 9, 10 of each organic EL device 6, the luminescent layer in each organic layer 22 emits light. A portion of the light directly penetrates the glass substrate 20, and the other portion of the light is reflected from the second electrodes 23 and then enters into the respective diffusion films 25 through the glass substrate 20. The diffusion films 25 diffuse the light and then help the light to exit outside.

A portion of light that exits from the diffusion films 25 directly reaches the reading portion R of the document 3. However, each organic EL device 6 has isotropic light emission characteristics and the diffusion films 25 diffuse light emitted from the respective organic EL devices 6, so that the majority of the other portion of light does not directly advance toward the reading portion R of the document 3.

Then, the reflectors 7 are provided along the light emitting portions 8 of the organic EL devices 6, respectively. A portion of the light that does not directly advance toward the reading portion R of the document 3 is reflected from the reflectors 7 and finally advances toward the reading portion R. As a result, light from the organic EL devices 6 converges on the reading portion R of the document 3 by the reflectors 7, thus increasing the illumination on the reading portion R.

Light that has reached the reading portion R of the document 3 is reflected at this portion and then advances toward the image sensor 5. Reflection light depends on the condition of the reading portion R, that is, the color of the reading portion R. Since the organic EL devices 6 emit white light, the condition of light reflected from the reading portion R is close to the condition of color recognized by the human eye under natural light. The scanner 1 converts the condition of the reflected light received by the image sensor 5 into an electrical signal and then reads in as image data.

After reading the information printed on the document 3 in this way, the scanner 1 moves the image sensor 5 and the lighting units 4 integrally along the glass plate 2 to change the reading portion R of the document 3. Again, the scanner 1 reads the information printed on this new reading portion R in like manner. The scanner 1 repeats such reading action over the entire document 3, that is, scans over the entire document 3, to read the whole information printed on the document 3.

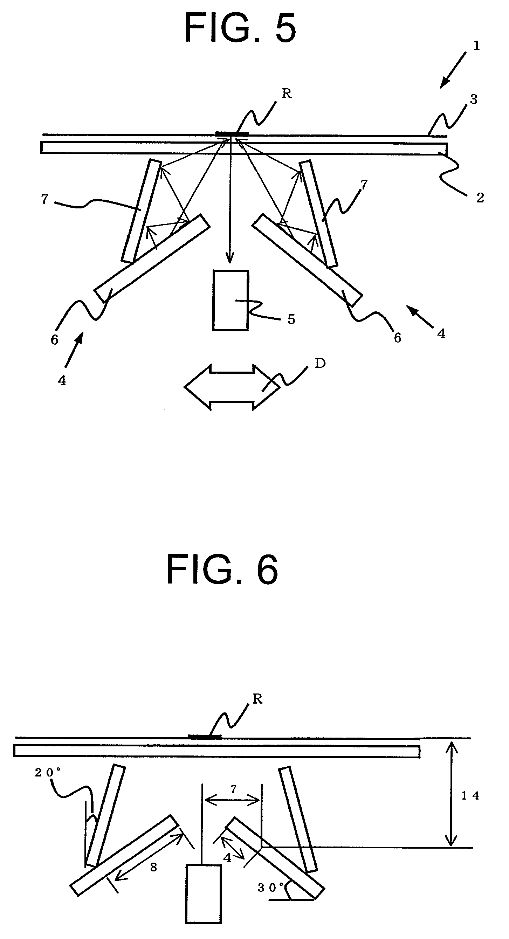

According to the first preferred embodiment, the following advantageous effects are obtained.
(1) The reflectors 7 reflect and converge light from the organic EL devices 6. This helps the lighting units 4 to converge light from the organic EL devices 6 without attenuation. Furthermore, this helps the scanner 1 to improve illumination on the reading portion R and also to reduce the size of the organic EL devices 6 required for the same illumination.
(2) Each reflector 7 is provided along the light emitting portion 8 of the organic EL device 6. This helps the lighting units 4 to efficiently converge light from the organic EL devices 6. Furthermore, this also allows the scanner 1 to efficiently converge light from the organic EL devices 6 on the reading portion R.
(3) The diffusion film 25 is adhered on the light exit side of each organic EL device 6. This helps the lighting units 4 to efficiently extract light emitted within the organic EL devices 6. Thus, the scanner 1 illuminates the reading portion R efficiently using light from the organic EL devices 6.
(4) Each diffusion film 25 is so formed that a base material made of a material having approximately the same refractive index as the glass substrate 20 of the organic EL device 6 dispersedly contains microscopic beads having a different refractive index from the base material. This helps to reduce light that is totally reflected at each interface between the glass substrate 20 and the diffusion film 25 and efficiently use light emitted from each organic EL device 6.
(5) The lighting units 4 and the image sensor 5 integrally scan along the glass plate 2. This allows the small-sized image sensor 5 and the lighting units 4 to read information printed on a large document.
(6) Two lighting units 4 are provided symmetrically with respect to the image sensor 5. This helps to further increase illumination on the reading portion R of the document 3.
(7) The organic EL devices 6 each have the organic layer 22 that is designed to emit white light. This helps to illuminate the reading portion R of the document 3 under substantially the same condition as natural light and to keep the condition of light reflected from the reading portion R closer to the condition of color recognized by the human eye under natural light.
(8) The angle θ1 that each reflector 7 makes with the normal of the organic EL device 6 is determined to maximize illumination on the reading portion R of the document 3. This helps to efficiently converge light from the organic EL devices 6 on the reading portion R of the document 3.
(9) The organic EL devices 6 are used as a light source. This allows the light source to be small and/or thin and also allows the scanner 1 to be small and/or thin as a whole.
   The following will describe a second preferred embodiment of an optical reader and lighting units thereof according to the present invention with reference to FIG. 5.
   FIG. 5 is a schematic sectional view of a scanner according to the second preferred embodiment. The light exit surface of each organic EL device 6 is arranged in parallel relation to the glass plate 2 in the first preferred embodiment. On the other hand, each organic EL device 6 is obliquely arranged with respect to the glass plate 2 in the second preferred embodiment. The same reference numerals denote the similar and identical components to those of the first preferred embodiment, and the description is omitted.
   As shown in FIG. 5, each organic EL device 6 is obliquely arranged with respect to the glass plate 2. The image sensor 5 senses light reflected from the reading portion R of the document 3 where the reading portion R is a part of the area surrounded by hypothetical planes each including the organic EL device 6 and hypothetical planes each including the reflector 7. Note that the term "hypothetical plane including the reflector 7" means that a hypothetical plane that includes a plane defined by the end of the reflector 7 adjacent to the glass plate 2 and the connection between the reflector 7 and the organic EL device 6 on the light exit surface of the lighting unit 4. Light emitted from each organic EL device 6 is repeatedly reflected between the reflector 7 and the second electrode 23, which is the metal electrode of the organic EL device 6, and then reaches the reading portion R of the document 3.
   In the case where each organic EL device 6 is arranged in parallel relation to the glass plate 2, a portion of light emitted from each organic EL device 6 does not contribute to illumination on the reading portion R because of its isotropic properties. However, in this embodiment, each organic EL device 6 is obliquely arranged with respect to the glass plate 2. The image sensor 5 senses light reflected from the reading portion R of the document 3 where the reading portion R is a part of the area surrounded by hypothetical planes each including the organic EL device 6 and hypothetical planes each including the reflector 7. This helps to efficiently converge light emitted from the organic EL devices 6 on the reading portion R in comparison to the structure that each organic EL devices 6 is arranged in parallel relation to the glass plate 2, with the consequence of increased illumination on the reading portion R.
   According to the second preferred embodiment, in addition to the advantageous effects mentioned in the paragraphs (1) through (9) of the first preferred embodiment, the following advantageous effect is obtained.
(10) Each organic EL device 6 is obliquely arranged with respect to the glass plate 2. The image sensor 5 senses light reflected from the reading portion R of the document 3 where the reading portion R is a part of the area surrounded by hypothetical planes each including the organic EL device 6 and hypothetical planes each including the reflector 7. This helps to increase illumination on the reading portion R in comparison to the structure where no reflector is provided on the light exit side of each organic EL device 6 and the light exit side of each organic EL device 6 is arranged in parallel relation to the surface of the glass plate 2.

### EXAMPLES

The following results have confirmed the advantageous effects according to the present invention.

### Example 1

Preparing an optical reader that includes a 4.5-mm wide image sensor and 8-mm wide organic EL devices each having 4-mm wide light emitting portion located on either side of the image sensor as shown in FIG. 4, illumination on the reading portion R located 7 mm above the center of the image sensor was calculated by optical simulation.

A plate-like reflector having a width of 5 mm and the same length as the organic EL device is arranged along the light emitting portion of each organic EL device. Each reflector specularly reflects light with a reflectance of 95 %. An angle that the reflector makes with the normal of the organic EL device is set for 35°.

### Example 2

The same reflectors as those of the example 1 are arranged, and a film having a large number of microscopic pyramids arrayed in matrix is provided on the light exit side of each organic EL device as a light-extracting optical element. An angle that each reflector makes with the normal of the organic EL device is 35°.

### Comparative Example 1

For comparison, illumination on the reading portion R when only the organic EL devices are provided was calculated by simulation.

### Comparative Example 2

Two brightness enhancement films in which a large number of microscopic prisms having a cross-section of isosceles triangle are arrayed in parallel relation to each other are layered on the light exit side of each organic EL device as a converging film so that directions in which the prisms of the respective films extend are perpendicular to each other. No reflector is provided.

### Comparative Example 3

The same light-extracting optical element as those of example 2 is provided on the light exit side of each organic EL device. No reflector is provided.

Table 1 shows the results of simulations under the above conditions. Table 1 shows relative illumination with respect to the result of simulation according to the comparative example 1, that is, the result of simulation according to the comparative example 1 is defined as one.

**TABLE 1**

| | Relative Illumination |
|---|---|
| Example 1 | 1.7 |
| Example 2 | 2.8 |
| Comparative Example 1 | 1 |
| Comparative Example 2 | 1.2 |
| Comparative Example 3 | 1.65 |

By comparison between example 1 and comparative example 1 and between example 2 and comparative example 2, it appears that the provision of the reflectors helps to increase illumination on the reading portion by approximately 1.7 times. This has confirmed that light emitted from the organic EL devices and does not advance directly toward the reading portion R is partially reflected from the reflectors to advance toward the reading portion R.

Through other experimental results, it has been demonstrated that the provision of converging film increases brightness on the converging film. However, these results of simulations have confirmed that the provision of converging film hardly helps to increase illumination on the reading portion. It is conceivable that light in the converging film is attenuated.

The following shows the results calculated through simulations by comparison between an angle which each reflector makes with the organic EL device, an angle which each organic EL device makes with the glass plate and illumination on the reading portion R.

### Example 3

An angle *θ*1 which each reflector makes with the normal of the organic EL device is 0°(that is, each reflector makes a right angle with the organic EL device), and an angle *θ*2 which the normal of the organic EL device makes with the glass plate is 90 (that is, each organic EL device is arranged in parallel relation to the glass plate).

The light-extracting optical element of the example 2 is used in this example, and the condition of each reflector is the same as those of the examples 1 and 2.

### Examples 4 through 10

Beyond determination of θ1 as 10°, 20°, 30°, 35°, 40°, 50° and 60°, respectively, the conditions are the same as those of the example 3.

### Example 11

Beyond determination of θ2 as 45°, the conditions are the same as those of the example 3.

### Examples 12 through 14

Beyond determination of θ1 as 10°, 20°, 30°, respectively, the conditions are the same as those of the example 11.

Table 2 shows the results of simulations under the above conditions. In Table 2, numerals indicate relative illumination with respect to the result of simulation according to the example 3, that is, the result of simulation according to the example 3 is defined as one.

**TABLE 2**

| θ2 | | | |
|---|---|---|---|
| | | 90° | 45° |
| θ1 | 0° | 1 (Example 3) | 1.16 (Example 11) |
| | 10° | 1.13 (Example 4) | 1.23 (Example 12) |
| | 20° | 1.24 (Example 5) | 1.18 (Example 13) |
| | 30° | 1.42 (Example 6) | 1.00 (Example 14) |
| | 35° | 1.44 (Example 7) | |
| | 40° | 1.44 (Example 8) | |
| | 50° | 1.38 (Example 9) | |
| | 60° | 1.07 (Example 10) | |

The results have confirmed that the inclination of each reflector with respect to the organic EL device and the inclination of each organic EL device with respect to the glass plate have a great influence on illumination on the reading portion R. An optimal inclination angle depends upon the light emission characteristics of the light source and the relative location between the light source and the reading portion R, so that an optimal inclination angle should be calculated by prototype or simulation in each case.

### Example 15

Preparing an optical reader that includes 4.5-mm wide image sensor and organic EL devices each having 8-mm wide light emitting portion, located on either side of the image sensor and determining a distance between the center of the light emitting portion of each organic EL device and the center of the image sensor as 7 mm as shown in FIG. 6, illumination on the reading portion R located 14 mm above the center of the light emitting portion of each organic EL device above the image sensor was calculated by optical simulation. A diffusion film, which is so formed that a base material having approximately the same refractive index as the substrate of the organic EL device dispersedly contains microscopic beads having a different refractive index from the base material, is provided on the light exit surface of each organic EL device.

A plate-like 5-mm wide reflector having the same length as the organic EL device is arranged along each light emitting portion. Each organic EL device is obliquely arranged with respect to the glass plate. The image sensor senses light reflected from the reading portion R of the document where the reading portion R is a part of the area surrounded by hypothetical planes each including the organic EL device and hypothetical planes each including the reflector. Each reflector specularly reflects light with a reflectance of 95 %. An angle which the normal of the surface of the transparent glass plate on which a document is mounted makes with the reflector is determined as 20°, and an angle which a hypothetical plane parallel relation to the surface of the glass plate on which a document is mounted makes with the organic EL device is determined as 30°.

### Comparative Example 4

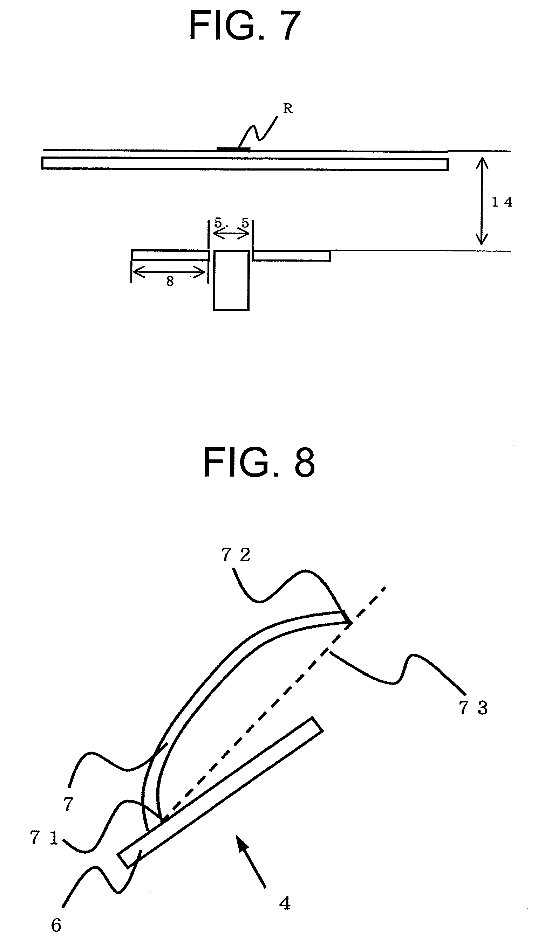

Preparing an optical reader that includes 4.5-mm wide image sensor and organic EL devices each having 8-mm wide light emitting portion, located on either side of the image sensor and determining a distance between the organic EL devices as 5.5 mm as shown in FIG. 7, illumination on the reading portion R located 14 mm above the light exit surface of each organic EL device was calculated by optical simulation. The same diffusion film as the example 15 is provided on the light exit surface of each organic EL device.

Relative illumination with respect to the result of simulation according to comparative example 4, that is, the result of simulation according to comparative example 4 is defined as one, is 1.76 in the example 15. This has confirmed that illumination on the reading portion R of a document is increased in comparison to the structure where no reflector which serves as a reflective member is provided on the light exit surface of each organic EL device and the light exit surface of each organic EL device is arranged in parallel relation to the surface of the transparent glass plate on which a document is mounted.

The present invention is not limited to the embodiments described above but may be modified into the following alternative embodiments.

In the preferred embodiments, the organic EL device 6 is used as a light source. In an alternative embodiment, another light emitting device, such as LED, cold cathode tube and inorganic EL device, is used. When an LED, a cold cathode tube, an inorganic EL device, or the like, is used as a light source, light from the light source is converged on a lighting target by a reflective member.

In the above preferred embodiments, each organic EL device 6 is of a bottom emission type in which light exits from the substrate side thereof. In an alternative embodiment, it may be of a top emission type in which light exits from the side opposite to the substrate side. When a top emission type organic EL device is used as a light source, the second electrode 23 and the protective film 24 need be transparent. On the other hand, the substrate 20 and the first electrode 21 need not be transparent.

In the preferred embodiments, the optical reader is applied to the scanner 1. In an alternative embodiment, it is applicable to a facsimile and a copier other than the scanner 1.

In the preferred embodiments, the lighting unit 4 is applied to the scanner 1. In an alternative embodiment, the lighting unit is applicable to other devices other than the scanner 1.

In the preferred embodiments, the scanner 1 includes a pair of lighting units 4. In an alternative embodiment, the scanner 1 includes a single lighting unit.

In the preferred embodiments, the scanner 1 integrally moves the image sensor 5 and the lighting units 4. In an alternative embodiment, the scanner 1 does not need to move integrally the image sensor 5 and the lighting units 4. For example, the image sensor 5 is fixed to the glass plate 2 and only the lighting units 4 are moved. In this case, reflected light from the document 3 should be guided to the image sensor 5 through another optical system.

As shown in FIG. 8, the reflective surface of the reflector 7 may be curved. In this case, a hypothetical plane that includes the reflector 7 means a hypothetical plane 73 which is defined by the upper end 72 of the reflector 7 and the connection 71 between the organic EL device 6 and the reflector 7 in cross-section perpendicular to the light exit surface of the organic EL device 6 of the lighting unit 4.

In an alternative embodiment, a portion of the reflective surface of the reflector 7 is a specular reflective surface and the other portion is a curved surface.

In an alternative embodiment, each lighting unit includes two organic EL devices. In other words, a second organic EL device in addition to the organic EL device 6 is provided on the light exit side of the organic EL device 6, instead of the reflective member. In this case, the metal electrode of the second organic EL device serves as a reflective member. Since each lighting unit includes two organic EL devices, the quantity of light that reaches the reading portion R of the document 3 is increased in comparison to the structure that each lighting unit 4 includes a single organic EL device. This helps to increase illumination on the reading portion R of the document 3.

In an alternative embodiment, a flat portion is formed for reflecting light which is collected between the reflector 7 and the light exit surface of the organic EL device 6 to exit outside the reflector 7 and the light exit surface of the organic EL device 6 at the connection of the reflector 7 with the light exit surface of the organic EL device 6. In this case, for example, as shown in FIG, 9, the reflector 7 consists of two components including a reflector 711 and a reflector 712. The reflector 712 is the flat portion provided at the connection of the reflector 7 with the organic EL device 6. Needless to say, the reflector 7 may be a single component, including a curved portion which is located at a specified distance away from the connection of the reflector 7 with the light exit surface of the organic EL device 6, and the reflective surface of the reflector 7 is curved to come closer to the light exit surface of the organic EL device 6. In this case, a portion between the curved portion and the connection of the reflector 7 with the light exit surface of the organic EL device 6 is a flat portion. When no flat portion is provided at the connection of the reflector 7 with the light exit surface of the organic EL device 6, light emitted from the organic EL device 6 possibly converges on the connection to deteriorate usability of light emitted from the organic EL device 6. However, in the above case, the flat portion which is formed at the connection of the reflector 7 with the light exit surface of the organic EL device 6 prevents light emitted from organic EL device 6 from converging on the connection between the reflector 7 and the light exit surface of the organic EL device 6.

Therefore, the present examples and embodiments are to be considered as illustrative and not restrictive, and the invention is not to be limited to the details given herein but may be modified within the scope of the appended claims.

A lighting unit is installed in an optical reader having a transparent plate and a sensor. The transparent plate can mount a document thereon. The lighting unit includes a light source and a reflective member provided on a light exit side of the light source. The reflective member converges light from the light source on the document. The lighting unit is operable to scan along the transparent plate. The sensor is provided for sensing light reflected from the document.

## Claims

1. A lighting unit comprising a light source and a reflective member provided on a light exit side of the light source, **characterized in that** the reflective member converges light from the light source.

2. The lighting unit according to claim 1, wherein the light source is an organic electroluminescent device formed in a linear shape, and wherein the reflective member extends longitudinally of the light source.

3. The lighting unit according to claim 2, **characterized in that** a light-extracting optical element is provided on the light exit side of the light source.

4. The lighting unit according to claim 3, wherein the light-extracting optical element is a diffusion film.

5. The lighting unit according to any one of claims 1 through 4, wherein the reflective member has a specular reflective surface that specularly reflects incident light.

6. The lighting unit according to any one of claims 1 through 5, wherein the reflective member has a reflective surface that is curved.

7. The lighting unit according to any one of claims 1 through 6, wherein the reflective member includes a flat portion that reflects light which is collected between the reflective member and an light exit surface of the light source.

8. The lighting unit according to claim 7, wherein the reflective member consists of two components, one of which is the flat portion.

9. An optical reader comprising a transparent plate on which a document is mounted, a lighting unit and a sensor, **characterized in that** the lighting unit includes a light source and a reflective member provided on a light exit side of the light source, **in that** the reflective member converges light from the light source on the document, **in that** the lighting unit is operable to scan along the transparent plate, and **in that** the sensor senses light reflected from the document.

10. The optical reader according to claim 9, wherein the sensor is operable to scan along the transparent plate integrally with the lighting unit.

11. The optical reader according to any one of claims 9 and 10, wherein the light source is an organic electroluminescent device formed in a linear shape, and wherein the reflective member extends longitudinally of the light source.

12. The optical reader according to any one of claims 9 through 11, wherein a light exit surface of the light source is obliquely arranged with respect to the transparent plate, and wherein the sensor senses light reflected from a portion of the document where the portion is a part of area surrounded by a hypothetical plane including the light source and a hypothetical plane including the reflective member.

13. The optical reader according to claim 12, wherein an angle that the normal of the light source makes with the transparent plate is set for 45°, and wherein an angle that the reflective member makes with the normal of the light source is set in a range between 10° and 30°.

14. The optical reader according to any one of claims 9 through 13, **characterized in that** a diffusion film is provided on the light exit side of the light source.

15. The optical reader according to any one of claims 9 through 14, wherein the reflective member has a specular reflective surface that specularly reflects incident light.

16. The optical reader according to any one of claims 9 through 15, wherein the reflective member has a reflective surface that is curved.

17. The optical reader according to any one of claims 9 through 16, wherein a pair of the lighting units is provided symmetrically with respect to the sensor.

18. The optical reader according to any one of claims 9 through 17, wherein the reflective member includes a flat portion that reflects light which is collected between the reflective member and an light exit surface of the light source.

19. The optical reader according to any one of claims 9 through 18, wherein the reflective member consists of two components, one of which is the flat portion.

20. The optical reader according to any one of claims 9 through 19, wherein a light exit surface of the lighting unit is arranged in parallel relation to the transparent plate, and wherein an angle that the reflective member makes with the normal of the light source is set in a range between 10° and 60°.

21. The optical reader according to any one of claims 9 through 20, wherein the optical reader is installed in a scanner, a facsimile or a copier.
